(19) Europäisches Patentamt / European Patent Office / Office européen des brevets

(11) **EP 3 562 047 B1**

(12) **EUROPEAN PATENT SPECIFICATION**

(45) Date of publication and mention
of the grant of the patent:
**20.10.2021   Bulletin 2021/42**

(51) Int Cl.:
*H04B 3/46* (2015.01)          *H04M 3/30* (2006.01)
*H04L 12/24* (2006.01)

(21) Application number: **18169893.7**

(22) Date of filing: **27.04.2018**

(54) **METHOD OF TRAINING A DEEP NEURAL NETWORK CLASSIFIER, A TRAINING MODULE AND A NETWORK ANALYZER**

VERFAHREN ZUM TRAINIEREN EINES TIEFENNEURONALEN NETZKLASSIFIKATORS, EINES TRAININGSMODUL UND EINEN NETZWERKANALYSATOR

PROCÉDÉ D'ENTRAÎNEMENT D'UN CLASSIFICATEUR DE RÉSEAU NEURONAL PROFOND, MODULE DE FORMATION ET ANALYSEUR DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2019   Bulletin 2019/44**

(73) Proprietor: **Nokia Solutions and Networks Oy**
**02610 Espoo (FI)**

(72) Inventors:
• **DROOGHAAG, Benoit**
**1421 Ophain-Bois-Seigneur-Isaac (BE)**

• **DIERICKX, Philippe**
**1450 Saint-Géry (BE)**

(74) Representative: **Louis Pöhlau Lohrentz**
**Patentanwälte**
**Postfach 30 55**
**90014 Nürnberg (DE)**

(56) References cited:
**EP-A1- 2 712 096     WO-A1-2015/043775**

## Description

Field of the invention

Various example embodiments relate to a method for training a deep neural network classifier for use in detecting impairments in a wireline communication network and a training module for a deep neural network classifier.

Background

In a communication network comprising a plurality of communication lines, for example in a digital subscriber line (DSL) network, existence of loop impairment in a communication line may affect the communication over that communication line.

In order to detect each impairment, some algorithms are developed by subject-matter experts (SME) to extract "features" out of the Hlog curves (magnitude of the frequency response of a transmission line, expressed in dB). Those features can for example be the number of dips detected, their height or the average value in a certain frequency band. Then the features are fed to a classifier that will combine the different features together and, based on some decision rules, will detect the presence or absence of the impairment, possibly with an associated confidence.

For such kind of algorithms, the problem of dealing with modem parasitic frequency effects are addressed during "feature extraction", where the SMEs must manually adapt the algorithms to make them robust against any known modem effect.

This is an extremely costly exercise, as every feature for every impairment must be manually checked against every known modem effect. Regularly, customers request to take a specific modem behavior into account which requires tuning or new development on an existing algorithm.

EP 2 712 096 A1 discloses a method for detecting a disturber in a Power Line Communication (PLC) network comprising a PLC transmitter and a PLC receiver connected by a segment of the PLC network.

WO 2015/043775 A1 discloses a method for analyzing a communication line.

The recent progress in the fields of Artificial Intelligence (AI) and machine learning makes it possible to use a deep neural network classifier to detect and correctly identify typical loop impairments affecting communication lines. Hlog "raw" values may be directly fed into a deep neural network classifier that is able to detect a set of impairments. This means that the system is able to learn the interesting features to look at in the Hlog measurements as well as how to combine them to detect an impairment.

To make this possible, the deep neural network must be trained on a large training set made of thousands of Hlogs measurements and associated information on the presence of impairments (labels). A sufficient amount of Hlogs measurements impacted by every impairment we want to detect must be present in the training set to make the detection reliable.

Summary of the Invention

However, according to the state of the art, if the training set does not comprise all the modem effect that may occur in a communication network, the impairments detection results using the deep neural network may be affected by modem effect not comprised in the training set.

An objective of the invention is to improve the efficiency of the impairments detection and its robustness against the parasitic frequency distortion introduced by the modems.

The object of the invention is achieved by the method and apparatus according to the claims.

According to one aspect of the present invention, there is provided a method according to claim 1 for training a deep neural network classifier for use in detecting impairments in a communication network, the communication network comprising a plurality of communication lines, the method comprising: a) obtaining a measured loop frequency response for the respective communication lines comprised in the communication network, wherein, the loop frequency response is measured by a modem over the respective communication line; b) extracting a modem parasitic effect for the respective communication lines from the measured loop frequency response of the respective communication line by determining an ideal loop frequency response for the respective communication lines based on the measured loop frequency response of the respective communication line and by determining the modem parasitic effect for the respective communication lines as the difference between the measured loop frequency response and the ideal loop frequency response of the respective communication line; c) clustering the modem parasitic effect of the respective communication lines into a first number M of groups and determining a modem signature for respective ones of the first number M of groups; d) obtaining an original training data set comprising a second number N of loop frequency responses corresponding to a first set of communication lines and associated information on the presence of impairment on the first set of communication lines; e) determining an augmented training data set comprising a third number of loop frequency responses and associated information on the presence of impairment based on the original training data set and the modem signature for respective ones of the first number of groups, wherein, the third number is not greater than N*M by subtracting respectively from respective ones of the second number N of loop frequency responses its corresponding modem signature, obtaining an intermediary loop frequency response for the respective ones of the second number N of loop frequency responses respectively, and by adding the first number M of modem signatures respectively onto the respective intermediary loop frequency response; f) training the deep neural network classifier using the augmented training data set.

In one embodiment, in step b1), the ideal loop frequency response for the respective communication lines is determined using a linear regression algorithm.

In one embodiment, in step c), K-Means algorithm is used for clustering the modem parasitic effect of the plurality of communication lines.

In one embodiment, at least a first subset of the first set of communication lines is comprised in the communication network.

In one embodiment, at least a second subset of the first set of communication lines is comprised in another communication network.

In one embodiment, the method further comprises: - extracting a modem parasitic effect for respective ones of a third subset of the first set of communication lines from the loop frequency response of the respective communication line; - clustering the modem parasitic effect of the third subset of communication lines into a fourth number of groups and determining a modem signature for respective ones of the fourth number of groups.

According to another aspect of the present invention, there is provided a training module according to claim 7 for a deep neural network classifier, comprising:- a measured loop frequency response obtaining module, configured to obtain a measured loop frequency response for respective communication lines comprised in a communication network, wherein, the loop frequency response is measured by a modem over the respective communication line; - a modem parasitic effect extracting module, communicatively connected to the measured loop frequency response obtaining module, and being configured to extract a modem parasitic effect for the respective communication lines from the measured loop frequency response of the respective communication line by determining an ideal loop frequency response for the respective communication lines based on the measured loop frequency response of the respective communication line and by determining the modem parasitic effect for the respective communication lines as the difference between the measured loop frequency response and the ideal loop frequency response of the respective communication line; - a clustering module, communicatively connected to the modem parasitic effect extracting module, being configured to cluster the modem parasitic effect of the respective communication lines into a first number M of groups and determining a modem signature for respective ones of the first number M of groups; - an original training data set obtaining module, configured to obtain an original training data set comprising a second number N of loop frequency responses corresponding to a first set of communication lines and associated information on the presence of impairment on the first set of communication lines; - an augmented training data set determining module, communicatively connected to the original training data set obtaining module and the clustering module, and being configured to determine an augmented training data set comprising a third number of loop frequency responses and associated information on the presence of impairment based on the original training data set and the modem signature for respective ones of the first number of groups, wherein, the third number is not greater than N*M by subtracting respectively from respective ones of the second number N of loop frequency responses its corresponding modem signature, obtaining an intermediary loop frequency response for the respective ones of the second number N of loop frequency responses respectively, and by adding the first number M of modem signatures respectively onto the respective intermediary loop frequency response; - a training module, communicatively connected to the augmented training data set determining module, and being configured to train the deep neural network classifier using the augmented training data set.

The solution in the present invention makes it possible to detect impairments on communication lines more efficiently and with more robustness against the parasitic frequency distortion introduced by the modems. Compared to the prior art solutions, it is not needed anymore to develop some feature extraction algorithms nor to update those algorithms every time a new modem parasitic distortion is identified. This enables a product to detect more impairments, with more confidence and less support from the SME.

Brief description of the figures

Fig. 1 depicts an illustrative structural diagram of a DSL network according to an embodiment of the present invention;
Fig. 2 depicts a schematic flow diagram of a method according to an embodiment of the present invention;
Fig. 3 depicts exemplary curves of a measured loop frequency response and an ideal loop frequency response of the transmission line 121;
Fig. 4 depicts a schematic curve of the modem parasitic effect for the communication line 121;
Fig. 5 depicts a schematic block diagram of a training module according to an embodiment of the present invention.

Same or similar reference numerals refer to same or similar parts or components.

Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. Similarly, specific structural and functional details disclosed herein are merely representative for purposes of describing the embodiments. The invention described herein, however, may be embodied in many alternate forms and should not be construed as limited to only the embodiments set forth herein.

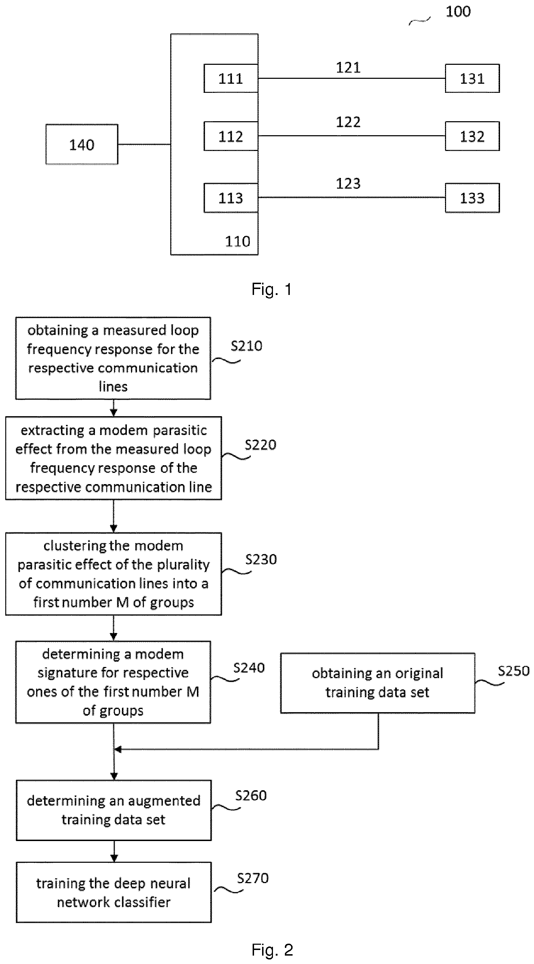

Fig.1 shows an illustrative structural diagram of a DSL network 100 according to an embodiment of the present invention.

As shown in Fig.1, the DSL network 100 comprises an access node 110 communicatively connected to a network analyser 140. The DSL network 100 may comprise more access nodes (not shown). The network analyzer 140 may be communicatively connected to the other access nodes in the DSL network 100 as well.

Specifically, the access node 110 may be implemented as a Distribution Point Unit (DPU) or a digital Subscriber Line Access Multiplexer (DSLAM). The access node 110 may comprise a plurality of communication units. For simplicity, three communication units 111, 112, 113 are shown in Fig.1 by way of example.

As shown in Fig.1, the communication units 111, 112 and 113 in the access node 110 are respectively connected to the modems 131, 132 and 133 via the respective communication lines 121, 122 and 123. A modem is a module of the Customer Premises Equipment (CPE) responsible for the modulation/demodulation of the signal on the transmission line. The modem may be capable of measuring loop frequency response of the communication line it is connected to.

In the following the present invention will be described with respect to the DSL network 100. Alternatively, the present invention may also be implemented in other communication networks, such as cable or Power Line Communication (PLC) communication networks.

Fig. 2 shows a schematic flow diagram of a method according to an embodiment of the present invention. The method may be implemented in a training module in form of software preferably outside the access node 110 and the network analyzer 140.

In step S210, the training module obtains a measured loop frequency response for the respective communication lines comprised in the DSL network 100, wherein, the loop frequency response may be measured by a modem in the respective communication line. In this step, all the Hlogs from all the communication lines of the DSL network 100 are collected. The Hlogs may be transmitted from the access node 110 to the network analyser 140, and then further forwarded or supplied to the training module. In the example where the DSL network 100 comprises other access nodes, the network analyzer 140 may collect Hlogs from the other access nodes in the DSL network 100 as well. Advantageously, no a-priori knowledge on the DSL lines is required. In other words, the Hlogs may be unlabelled.

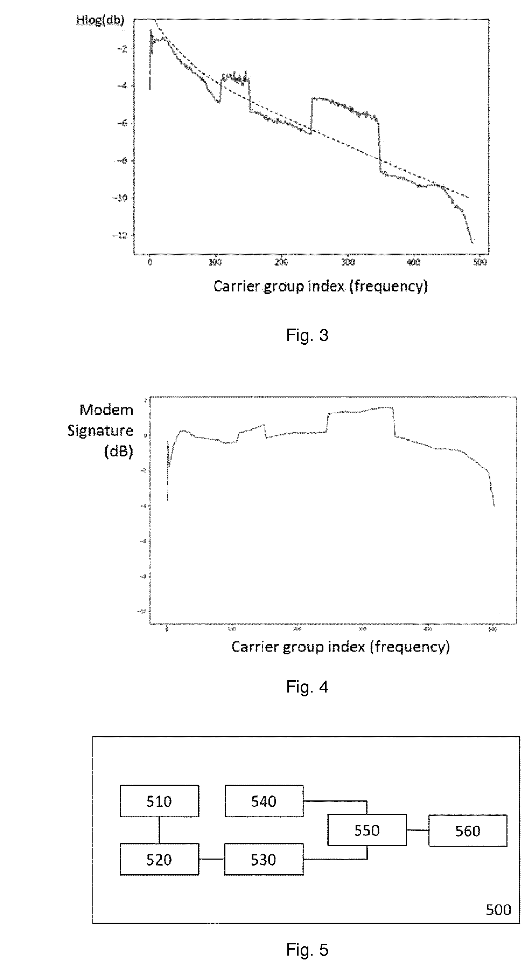

Fig. 3 shows exemplary curves of a measured loop frequency response and an ideal loop frequency response of the transmission line 121.

The solid line in Fig. 3 shows an exemplary curve of a measured loop frequency response of the transmission line 121. The loop frequency response may be measured by the modem 131 and then transmitted to the communication unit 111 and fed to the training module .

The modems in the DSL network 100 are not designed to be accurate measurement tools, especially on CPE side, where low cost is usually a strong design driver. In practice, a modem is reporting the Hlog as it can "see" the line frequency response through its own transmission chain, composed of many different analogue (non-perfect) circuitry elements such as the transmission line driver, high-pass filter, low-pass anti-aliasing filter, Rx low-noise amplifier, etc. As consequence, the Hlog is usually the sum of the real loop frequency response and the parasitic modem frequency response.

In step S220, the training module extracts a modem parasitic effect for the respective communication lines from the measured loop frequency response of each communication line. Specifically, in one embodiment, the modem parasitic effect is extracted as described below.

First, the training module determines an ideal loop frequency response for each communication line based on the measured loop frequency response of the respective communication line.

The dashed line in Fig. 3 shows an exemplary curve of an ideal loop frequency response of the transmission line 121.

According to transmission line theory, at first approximation, the attenuation caused by a twisted copper pair is proportional to the square root of the frequency. This approximation is good enough for the present invention. In other words, the theoretical Hlog of an unimpaired loop may follow the equation:

$$Hlog\ (dB) = k * sqrt(f)$$

Where f is the frequency (in Hertz) and k is a constant depending on the loop length.

Specifically, the above formula is developed in the context of a DSL communication network (twisted pair). As the present invention may be implemented in other communication network other than the DSL network described above, the equation may be adapted for the other communication network technologies, for example, coaxial, PLC communication network, etc.

For every measured Hlog, it is possible to find the best "k" value that minimizes the difference between the measured and theoretical Hlogs. Any curve fitting technique can be used to find the best "k". It is very easy to compute, if a variable substitution x=sqrt(f) is applied, because the problem is reduced to a simple linear regression. Thus in one embodiment, the ideal loop frequency response for the respective communication lines may be determined using a linear regression algorithm.

Then, the modem parasitic effect for the respective communication lines is determined as a difference between the measured loop frequency response and the ideal loop frequency response determined for the respective communication line.

Fig. 4 shows a schematic curve of the modem parasitic effect of the communication line 121. It may be obtained by subtracting the dashed line from the solid line in Fig. 3.

As seen from Fig.4, there are significant deviations between the 2 curves at different location:

- The sharp increase on the very first frequencies is due to the modem high-pass filter being non-ideal.
- The decrease (roll off) above carrier group 480 is due to the modem anti-aliasing (low-pass) filter whose cut-off frequency is being set too low.
- The offset between carrier groups +/- 100-150 and +/- 250-350 and the rest of the curve is due to the difference of gain between the upstream and downstream signal paths being not compensated correctly in the Hlog measurement.

The high-pass filter effect in the low frequencies could be easily mixed up with the presence of a capacitive coupling and the low-pass anti-aliasing filter effect in the high frequencies which is very similar to the attenuation caused by some other loop impairments such as bridged-taps.

To enable reliable detection of loop impairment, all those modem parasitic frequency effects must be cancelled. Moreover, as these effects are usually the consequence of poor modem design, it is mandatory to correctly detect and cancel these effects for every type of modems being deployed on a DSL network.

In step S230, the training module clusters the modem parasitic effect of the plurality of communication lines into a first number M of groups. Then in step S240 the access node 110 determines a modem signature for each of the first number M of groups.

Specifically, any blind clustering technique can be used in step S230. In one embodiment, K-Means algorithm is used for clustering the modem parasitic effect of the plurality of communication lines. K-Means algorithm has proven to give good results for this use case.

Theoretically, the clustering must be done on unimpaired loops, so that only the modem signatures and not the loop impairments are clustered. In practice, a small amount of impairments can be tolerated if they are equally distributed among all the different modem types for which we want to extract the signature.

In step S250, the training module obtains an original training data set comprising a second number N of loop frequency responses corresponding to a first set of communication lines and associated information on the presence of impairment on the first set of communication lines.

In one embodiment, at least a first subset of the first set of communication lines is comprised in the DSL network 100. Additionally or alternatively, at least a second subset of the first set of communication lines is comprised in another DSL network.

In an example, at least part of the communication lines comprised in the DSL network 100 is not included in the first set. Namely, the modem parasitic effect of at least part of the communication lines comprised in the DSL network 100 is not included in the original training data set.

In step S260, the training module determines an augmented training data set comprising a third number of loop frequency responses and associated information on the presence of impairment based on the original training data set and the modem signature for each of the first number M of groups, wherein, the third number is not greater than N*M. The third number may be less than N*M, if some of the first set of communication lines are comprised in the DSL network 100, or the modem signature of some of the first set of communication lines is the same as any modem signature of the communication lines comprised in the DSL network 100. In one embodiment, the augmented training data set is determined as described below.

First, the training module subtracts respectively from each of the second number N of loop frequency responses its corresponding modem signature, obtaining an intermediary loop frequency response for each of the second number N of loop frequency responses respectively.

Then the first number M of modem signatures determined in step S240 are respectively added onto each of N intermediary loop frequency responses. In this way, up to N*M new Hlogs with associated information on the presence of impairment may be created from N original Hlog in the original training set and M modem signature of the M groups clustered in step S320.

In an example, the training module may check the similarity/distance between modem signatures, so as to determine whether the modem signatures are different enough to be considered. In one example, if the modem signature of a frequency response comprised in the original training data set is substantially same as the modem signature of one type of modem in the current DSL network (similarity/distance lower than a predetermined threshold), it is not necessary to first subtract and then add the same modem signature.

If the modem signature of a third subset of the first set of the communication lines is not known, steps similar to the above described steps S220, S230 and S240 may be performed by the training module, so as to determine the modem signature of the third subset of communication lines.

Specifically, in one embodiment, the training module may extract a modem parasitic effect for each of the third subset of communication lines from the loop frequency response of each communication line. Then the training module may cluster the modem parasitic effect of the third subset of communication lines into a fourth number of groups and determines a modem signature for respective ones of the fourth number of groups.

After the modem signature corresponding to each of the second number N of loop frequency responses is known or determined, the augmented training data set may be determined as described above with respect to step S260.

In step S270, the training module trains the deep neural network classifier using the augmented training data set to get a trained model.

Then, during operation, Hlog "raw" values may be directly fed into the trained deep neural network model. It is possible to detect impairments on DSL lines more efficiently and with more robustness against the parasitic frequency distortion introduced by the modems.

Fig. 5 shows a schematic block diagram of a training module 500 according to an embodiment of the present invention.

The training module 500 may be implemented as a piece of software typically running on a generic software platform for training network analyzers as per the network analyzer 140. As shown in Fig. 5, the training module 500 comprises a measured loop frequency response obtaining module 510, a modem parasitic effect extracting module 520, a clustering module 530, an original training data set obtaining module 540, an augmented training data set determining module 550 and a training module 560.

The measured loop frequency response obtaining module 510 is configured to obtain a measured loop frequency response for respective communication lines comprised in a DSL network, wherein, the loop frequency response is measured by a modem in the respective communication line.

The modem parasitic effect extracting module 520 is communicatively connected to the measured loop frequency response obtaining module 510, and is configured to extract a modem parasitic effect for each of the communication lines from the measured loop frequency response of each communication line.

The clustering module 530 is communicatively connected to the modem parasitic effect extracting module 520, and is configured to cluster the modem parasitic effect of the plurality of communication lines into a first number M of groups, and to determine a modem signature for each of the first number M of groups.

The original training data set obtaining module 540 is configured to obtain an original training data set comprising a second number N of loop frequency responses corresponding to a first set of communication lines and associated information on the presence of impairment on the first set of communication lines;

The augmented training data set determining module 550 is communicatively connected to the original training data set obtaining module 540 and the clustering module 530. The augmented training data set determining module 550 is configured to determine an augmented training data set comprising a third number of loop frequency responses and associated information on the presence of impairment based on the original training data set and the modem signature for each of the first number of groups. The third number is not greater than N*M.

The training module 560 is communicatively connected to the augmented training data set determining module 550, and is configured to train the deep neural network classifier using the augmented training data set to get a trained model.

In one embodiment, the modem parasitic effect extracting module 520 is configured to determine an ideal loop frequency response for the respective communication lines based on the measured loop frequency response of the respective communication line; and to determine the modem parasitic effect for the respective communication lines as a difference between the measured loop frequency response and the ideal loop frequency response of the respective communication line.

**Claims**

1. A method for training a deep neural network classifier for use in detecting impairments in a communication network, the communication network comprising a plurality of communication lines, the method comprising:

a) obtaining a measured loop frequency response for the respective communication lines comprised in the communication network, wherein, the loop frequency response is measured by a modem over the respective communication line;
b) extracting a modem parasitic effect for the respective communication lines from the measured loop frequency response of the respective communication line by determining an ideal loop frequency response for the respective communication lines based on the measured loop frequency response of the respective communication line and by determining the modem parasitic effect for the respective communication lines as the difference between the measured loop frequency response and the ideal loop frequency response of the respective communication line;
c) clustering the modem parasitic effect of the respective communication lines into a first number M of groups and determining a modem signature for respective ones of the first number M of groups;

d) obtaining an original training data set comprising a second number N of loop frequency responses corresponding to a first set of communication lines and associated information on the presence of impairment on the first set of communication lines;

e) determining an augmented training data set comprising a third number of loop frequency responses and associated information on the presence of impairment based on the original training data set and the modem signature for respective ones of the first number of groups, wherein, the third number is not greater than N*M by subtracting respectively from respective ones of the second number N of loop frequency responses its corresponding modem signature, obtaining an intermediary loop frequency response for the respective ones of the second number N of loop frequency responses respectively, and by adding the first number M of modem signatures respectively onto the respective intermediary loop frequency response;

f) training the deep neural network classifier using the augmented training data set.

2. The method according to claim 1,
wherein in step b1), the ideal loop frequency response for the respective communication lines is determined using a linear regression algorithm.

3. The method according to claim 1,
wherein in step c), K-Means algorithm is used for clustering the modem parasitic effect of the plurality of communication lines.

4. The method according to claim 1,
wherein at least a first subset of the first set of communication lines is comprised in the communication network (100).

5. The method according to claim 1 or 4,
wherein at least a second subset of the first set of communication lines is comprised in another communication network.

6. The method according to claim 5,
the method further comprising:

- extracting a modem parasitic effect for respective ones of a third subset of the first set of communication lines from the loop frequency response of the respective communication line;
- clustering the modem parasitic effect of the third subset of communication lines into a fourth number of groups and determining a modem signature for respective ones of the fourth number of groups.

7. A training module (500) for a deep neural network classifier, comprising:

- a measured loop frequency response obtaining module (510), configured to obtain a measured loop frequency response for respective communication lines comprised in a communication network, wherein, the loop frequency response is measured by a modem over the respective communication line;
- a modem parasitic effect extracting module (520), communicatively connected to the measured loop frequency response obtaining module (510), and being configured to extract a modem parasitic effect for the respective communication lines from the measured loop frequency response of the respective communication line by determining an ideal loop frequency response for the respective communication lines based on the measured loop frequency response of the respective communication line and by determining the modem parasitic effect for the respective communication lines as the difference between the measured loop frequency response and the ideal loop frequency response of the respective communication line;
- a clustering module (530), communicatively connected to the modem parasitic effect extracting module (520), being configured to cluster the modem parasitic effect of the respective communication lines into a first number M of groups and determining a modem signature for respective ones of the first number M of groups;
- an original training data set obtaining module (540), configured to obtain an original training data set comprising a second number N of loop frequency responses corresponding to a first set of communication lines and associated information on the presence of impairment on the first set of communication lines;
- an augmented training data set determining module (550), communicatively connected to the original training data set obtaining module (540) and the clustering module (530), and being configured to determine an augmented training data set comprising a third number of loop frequency responses and associated information on the presence of impairment based on the original training data set and the modem signature for respective ones of the first number of groups, wherein, the third number is not greater than N*M by subtracting respectively from respective ones of the second number N of loop frequency responses its corresponding modem signature, obtaining an intermediary loop frequency response for the respective ones of the second number N of loop frequency responses respectively, and by adding the first number M of modem signatures respectively onto the respective intermediary loop frequency response;
- a training module (560), communicatively connected to the augmented training data set determining module (550), and being configured to train the deep neural network classifier using the augmented training data set.

**Patentansprüche**

1. Verfahren zum Trainieren eines Klassifikators eines tiefen neuronalen Netzes zur Verwendung bei der Erkennung von Beeinträchtigungen in einem Kommunikationsnetz, wobei das Kommunikationsnetz eine Vielzahl von Kommunikationsleitungen umfasst,
wobei das Verfahren umfasst:

   a) Erhalten eines gemessenen Schleifenfrequenzgangs für die jeweiligen Kommunikationsleitungen, die in dem Kommunikationsnetz enthalten sind, wobei der Schleifenfrequenzgang durch ein Modem über die jeweilige Kommunikationsleitung gemessen wird;
   b) Extrahieren eines parasitären Modemeffekts für die jeweiligen Kommunikationsleitungen aus dem gemessenen Schleifenfrequenzgang der jeweiligen Kommunikationsleitung durch Bestimmen eines idealen Schleifenfrequenzgangs für die jeweiligen Kommunikationsleitungen auf der Grundlage des gemessenen Schleifenfrequenzgangs der jeweiligen Kommunikationsleitung und durch Bestimmen des parasitären Modemeffekts für die jeweiligen Kommunikationsleitungen als die Differenz zwischen dem gemessenen Schleifenfrequenzgang und dem idealen Schleifenfrequenzgang der jeweiligen Kommunikationsleitung;
   c) Clustern des parasitären Modemeffekts der jeweiligen Kommunikationsleitungen in eine erste Anzahl M von Gruppen und Bestimmen einer Modem-Signatur für die jeweiligen Gruppen der ersten Anzahl M von Gruppen;
   d) Erhalten eines ursprünglichen Trainingsdatensatzes, der eine zweite Anzahl N von Schleifenfrequenzgängen, die einem ersten Satz von Kommunikationsleitungen entsprechen, und zugehörige Informationen über das Vorhandensein von Beeinträchtigungen auf dem ersten Satz von Kommunikationsleitungen umfasst;
   e) Bestimmen eines erweiterten Trainingsdatensatzes, der eine dritte Anzahl von Schleifenfrequenzgängen und zugehörige Informationen über das Vorhandensein einer Beeinträchtigung auf der Grundlage des ursprünglichen Trainingsdatensatzes und der Modem-Signatur für jeweilige Gruppen der ersten Anzahl von Gruppen umfasst, wobei die dritte Anzahl nicht größer als N*M ist, indem jeweils von jeweiligen Schleifenfrequenzgängen der zweiten Anzahl N ihre entsprechende Modem-Signatur subtrahiert wird, ein Zwischenschleifenfrequenzgang für die jeweiligen Schleifenfrequenzgänge der zweiten Anzahl N erhalten wird und die erste Anzahl M von Modem-Signaturen jeweils zu dem jeweiligen Zwischenschleifenfrequenzgang addiert wird;
   f) Trainieren des Klassifikators eines tiefen neuronalen Netzes unter Verwendung des erweiterten Trainingsdatensatzes.

2. Verfahren nach Anspruch 1,
wobei in Schritt b1) der ideale Schleifenfrequenzgang für die jeweiligen Kommunikationsleitungen unter Verwendung eines linearen Regressionsalgorithmus bestimmt wird.

3. Verfahren nach Anspruch 1,
wobei in Schritt c) der K-Means-Algorithmus zum Clustern des parasitären Modemeffekts der Vielzahl von Kommunikationsleitungen verwendet wird.

4. Verfahren nach Anspruch 1,
wobei mindestens eine erste Teilmenge des ersten Satzes von Kommunikationsleitungen in dem Kommunikationsnetz (100) enthalten ist.

5. Verfahren nach Anspruch 1 oder 4,
wobei mindestens eine zweite Teilmenge des ersten Satzes von Kommunikationsleitungen in einem anderen Kommunikationsnetz enthalten ist.

6. Verfahren nach Anspruch 5,
wobei das Verfahren ferner umfasst:

   - Extrahieren eines parasitären Modemeffekts für jeweilige Kommunikationsleitungen einer dritten Teilmenge des ersten Satzes von Kommunikationsleitungen aus dem Schleifenfrequenzgang der jeweiligen Kommunikationsleitung;
   - Clustern des parasitären Modemeffekts der dritten Teilmenge von Kommunikationsleitungen in eine vierte Anzahl von Gruppen und Bestimmen einer Modem-Signatur für die jeweiligen Gruppen der vierten Anzahl von Gruppen.

7. Trainingsmodul (500) für einen Klassifikator eines tiefen neuronalen Netzes, das Folgendes umfasst:

   - ein Modul (510) zum Erhalten eines gemessenen Schleifenfrequenzgangs, das konfiguriert ist, um einen gemessenen Schleifenfrequenzgang für jeweilige Kommunikationsleitungen zu erhalten, die in dem Kommunikationsnetz enthalten sind, wobei der Schleifenfrequenzgang durch ein Modem über die jeweilige Kommunikationsleitung gemessen wird;

- ein Modul (520) zum Extrahieren des parasitären Modemeffekts, das kommunikativ mit dem Modul (510) zum Erhalten des gemessenen Schleifenfrequenzgangs verbunden ist und konfiguriert ist, um einen parasitären Modemeffekt für die jeweiligen Kommunikationsleitungen aus dem gemessenen Schleifenfrequenzgang der jeweiligen Kommunikationsleitung zu extrahieren durch Bestimmen eines idealen Schleifenfrequenzgangs für die jeweiligen Kommunikationsleitungen auf der Grundlage des gemessenen Schleifenfrequenzgangs der jeweiligen Kommunikationsleitung und durch Bestimmen des parasitären Modemeffekts für die jeweiligen Kommunikationsleitungen als die Differenz zwischen dem gemessenen Schleifenfrequenzgang und dem idealen Schleifenfrequenzgang der jeweiligen Kommunikationsleitung;

- ein Clustermodul (530), das kommunikativ mit dem Modul (520) zum Extrahieren des parasitären Modemeffekts verbunden ist und konfiguriert ist, um den parasitären Modemeffekt der jeweiligen Kommunikationsleitungen in eine erste Anzahl M von Gruppen zu clustern und eine Modem-Signatur für die jeweiligen Gruppen der ersten Anzahl M von Gruppen zu bestimmen;

- ein Modul (540) zum Erhalten eines ursprünglichen Trainingsdatensatzes, das konfiguriert ist, um einen ursprünglichen Trainingsdatensatz zu erhalten, der eine zweite Anzahl N von Schleifenfrequenzgängen, die einem ersten Satz von Kommunikationsleitungen entsprechen, und zugehörige Informationen über das Vorhandensein von Beeinträchtigungen auf dem ersten Satz von Kommunikationsleitungen umfasst;

- ein Modul (550) zum Bestimmen eines erweiterten Trainingsdatensatzes, das kommunikativ mit dem Modul (540) zum Erhalten des ursprünglichen Trainingsdatensatzes und dem Clustermodul (530) verbunden ist und konfiguriert ist, um einen erweiterten Trainingsdatensatz, der eine dritte Anzahl von Schleifenfrequenzgängen und zugehörige Informationen über das Vorhandensein einer Beeinträchtigung auf der Grundlage des ursprünglichen Trainingsdatensatzes und der Modem-Signatur für jeweilige Gruppen der ersten Anzahl von Gruppen umfasst, zu bestimmen, wobei die dritte Anzahl nicht größer als N*M ist, indem jeweils von jeweiligen Schleifenfrequenzgängen der zweiten Anzahl N ihre entsprechende Modem-Signatur subtrahiert wird, ein Zwischenschleifenfrequenzgang für die jeweiligen Schleifenfrequenzgänge der zweiten Anzahl N erhalten wird und die erste Anzahl M von Modem-Signaturen jeweils zu dem jeweiligen Zwischenschleifenfrequenzgang addiert wird;

- ein Trainingsmodul (560), das kommunikativ mit dem Modul (550) zum Bestimmen eines erweiterten Trainingsdatensatzes verbunden ist und konfiguriert ist, um den Klassifikator des tiefen neuronalen Netzes unter Verwendung des erweiterten Trainingsdatensatzes zu trainieren.

**Revendications**

1. Procédé pour entraîner un classificateur de réseau neuronal profond destiné à une utilisation dans la détection de détériorations dans un réseau de communication, le réseau de communication comprenant une pluralité de lignes de communication, le réseau comprenant :

   a) l'obtention d'une réponse de fréquence de boucle mesurée pour les lignes de communication respectives comprises dans le réseau de communication, dans lequel la réponse de fréquence de boucle est mesurée par un modem sur la ligne de communication respective ;
   b) l'extraction d'un effet parasitaire de modem pour les lignes de communication respectives de la réponse de fréquence de boucle mesurée de la ligne de communication respective en déterminant une réponse de fréquence de boucle idéale pour les lignes de communication respectives sur la base de la réponse de fréquence de boucle mesurée de la ligne de communication respective et en déterminant l'effet parasitaire de modem pour les lignes de communication respectives comme étant la différence entre la réponse de fréquence de boucle mesurée et la réponse de fréquence de boucle idéale de la ligne de communication respective ;
   c) le regroupement de l'effet parasitaire de modem des lignes de communication respectives dans un premier nombre M de groupes et la détermination d'une signature de modem pour des groupes respectifs du premier nombre M de groupes ;
   d) l'obtention d'un ensemble de données d'entraînement d'origine comprenant un deuxième nombre N de réponses de fréquence de boucle correspondant à un premier ensemble de lignes de communication et des informations associées concernant la présence d'une détérioration sur le premier ensemble de lignes de communication ;
   e) la détermination d'un ensemble de données d'entraînement augmenté comprenant un troisième nombre de réponses de fréquence de boucle et des informations associées concernant la présence d'une détérioration sur la base de l'ensemble de données d'entraînement d'origine et de la signature de modem pour des groupes respectifs du premier nombre de groupes, dans lequel le troisième nombre n'est pas supérieur à N*M en soustrayant respectivement de réponses respectives du deuxième nombre N de réponses de fréquence de boucle sa signature de modem correspondante, obtenant une réponse de fréquence de boucle intermédiaire pour les réponses respectives du deuxième nombre N de réponses de fréquence de boucle respectivement, et en ajoutant le premier nombre M de signatures de modem respectivement à la réponse de fréquence de boucle intermédiaire respective ;

f) l'entraînement du classificateur de réseau neuronal profond à l'aide de l'ensemble de données d'entraînement augmenté.

**2.** Procédé selon la revendication 1,
dans lequel à l'étape b1) la réponse de fréquence de boucle idéale pour les lignes de communication respectives est déterminée à l'aide d'un algorithme de régression linéaire.

**3.** Procédé selon la revendication 1,
dans lequel à l'étape c) un algorithme K-moyennes est utilisé pour regrouper l'effet parasitaire de modem de la pluralité de lignes de communication.

**4.** Procédé selon la revendication 1,
dans lequel au moins un premier sous-ensemble du premier ensemble de lignes de communication est compris dans le réseau de communication (100).

**5.** Procédé selon la revendication 1 ou 4,
dans lequel au moins un deuxième sous-ensemble du premier ensemble de lignes de communication est compris dans un autre réseau de communication.

**6.** Procédé selon la revendication 5,
le procédé comprenant en outre :

- l'extraction d'un effet parasitaire de modem pour des lignes respectives d'un troisième sous-ensemble du premier ensemble de lignes de communication de la réponse de fréquence de boucle de la ligne de communication respective ;
- le regroupement de l'effet parasitaire de modem du troisième sous-ensemble de lignes de communication dans un quatrième nombre de groupes et la détermination d'une signature de modem pour des groupes respectifs du quatrième nombre de groupes.

**7.** Module d'entraînement (500) pour un classificateur de réseau neuronal profond, comprenant :

- un module d'obtention de réponse de fréquence de boucle mesurée (510), configuré pour obtenir une réponse de fréquence de boucle mesurée pour des lignes de communication respectives comprises dans un réseau de communication, dans lequel la réponse de fréquence de boucle est mesurée par un modem sur la ligne de communication respective ;
- un module d'extraction d'effet parasitaire de modem (520), connecté en communication au module d'obtention de réponse de fréquence de boucle mesurée (510), et qui est configuré pour extraire un effet parasitaire de modem pour les lignes de communication respectives de la réponse de fréquence de boucle mesurée de la ligne de communication respective en déterminant une réponse de fréquence de boucle idéale pour les lignes de communication respectives sur la base de la réponse de fréquence de boucle mesurée de la ligne de communication respective et en déterminant l'effet parasitaire de modem pour les lignes de communication respectives comme étant la différence entre la réponse de fréquence de boucle mesurée et la réponse de fréquence de boucle idéale de la ligne de communication respective ;
- un module de regroupement (530), connecté en communication au module d'extraction d'effet parasitaire de modem (520), qui est configuré pour regrouper l'effet parasitaire de modem des lignes de communication respectives dans un premier nombre M de groupes et déterminant une signature de modem pour des groupes respectifs du premier nombre M de groupes ;
- un module d'obtention d'ensemble de données d'entraînement d'origine (540), configuré pour obtenir un ensemble de données d'entraînement d'origine comprenant un deuxième nombre N de réponses de fréquence de boucle correspondant à un premier ensemble de lignes de communication et des informations associées concernant la présence d'une détérioration sur le premier ensemble de lignes de communication ;
- un module de détermination d'ensemble de données d'entraînement augmenté (550), connecté en communication au module d'obtention d'ensemble de données d'entraînement d'origine (540) et au module de regroupement (530), et qui est configuré pour déterminer un ensemble de données d'entraînement augmenté comprenant un troisième nombre de réponses de fréquence de boucle et des informations associées concernant la présence d'une détérioration sur la base de l'ensemble de données d'entraînement d'origine et de la signature de modem pour des groupes respectifs du premier nombre de groupes, dans lequel le troisième nombre n'est pas supérieur à N*M en soustrayant respectivement de réponses respectives du deuxième nombre N de réponses de fréquence de boucle sa signature de modem correspondante, obtenant une réponse de fréquence de boucle intermédiaire pour les réponses respectives du deuxième nombre N de réponses de fréquence de boucle respectivement, et en ajoutant le premier nombre M de signatures de modem respectivement à la réponse de fréquence de boucle intermédiaire respective ;
- un module d'entraînement (560), connecté en communication au module de détermination d'ensemble de données d'entraînement augmenté (550), et qui est configuré pour entraîner le classificateur de réseau neuronal profond à l'aide de l'ensemble de données d'entraînement augmenté.

100

| 111 | —121— | 131 |

| 112 | —122— | 132 |

| 113 | —123— | 133 |

140 — 110

Fig. 1

obtaining a measured loop
frequency response for the
respective communication
lines — S210

↓

extracting a modem parasitic
effect from the measured loop
frequency response of the
respective communication line — S220

↓

clustering the modem
parasitic effect of the plurality
of communication lines into a
first number M of groups — S230

↓

determining a modem
signature for respective
ones of the first number M
of groups — S240

obtaining an original
training data set — S250

↓

determining an augmented
training data set — S260

↓

training the deep neural
network classifier — S270

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2712096 A1

- WO 2015043775 A1